# EUROPÄISCHE PATENTSCHRIFT

(11) **EP 0 446 613 B1**
(45) Veröffentlichungstag und Bekanntmachung des Hinweises auf die Patenterteilung: **06.12.1995**
(21) Anmeldenummer: 91101737.4
(22) Anmeldetag: 08.02.1991
(51) Int. Cl.: H04N 7/24, H04N 7/08

(54) **Verfahren zur Aufbereitung von mehreren Fernsehsignalen für Übertragungszwecke sowie Anwendung**
Method of processing several television signals for transmission and device
Procédé de traitement de plusieurs signaux de télévision en vue de leur transmission et dispositif

(30) Priorität: 15.03.1990 DE 4008200
(43) Veröffentlichungstag der Anmeldung: 18.09.1991
(73) Patentinhaber: ANT Nachrichtentechnik GmbH, D-71522 Backnang (DE)
(72) Erfinder: Süssmeier, Georg, Dipl.-Ing., W-7150 Backnang (DE); Krull, Klaus, Dipl.-Ing. (FH), W-7153 Weissach im Tal (DE); Grotz, Karlheinz, Dipl.-Ing. (FH), W-7012 Fellbach (DE)

(56) Entgegenhaltungen:
- DE-A- 3 203 785
- DE-A- 3 707 243
- IEEE COMMUNICATIONS MAGAZINE Bd. 24, Nr. 5, Mai 1986, NEW YORK, US Seiten 33 - 49 C.W. LUNDGREN ET AL. 'Applications of Video on Fiber Cable'
- PROCEEDINGS OF 1986 INTERNATIONAL Z]RICH SEMINAR ON DIGITAL COMMUNICATIONS 11.-13. März, ZÜrich, Schweiz, Seiten 141 148; P. GONET et al.: 'ASYNCHRONOUS TIME DIVISION SWITCHING : THE WAY TO FLEXIBLE BROADBAND COMMUNICATION NETWORKS'
- NHK LABORATORIES NOTE Nr. 345, April 1987, TOKYO, JP Seiten 1 - 10 K. OYAMADA ET AL. 'FDM OPTICAL FIBER TRANSMISSION FOR HDTV IN BROADCASTING STATION'

## Beschreibung

Die Erfindung betrifft ein Verfahren zur Aufbereitung von mehreren Fernsehsignalen für Übertragungszwecke.

Für die Fernsehprogrammübertragung über Breitbandkabel-Verteilnetze werden Fernsehsignale zunächst in einer Zwischenfrequenzlage aufbereitet, bevor sie nach erneuter Umsetzung im Übertragungsfrequenzbereich, beispielsweise zwischen 40 und 450 MHz übertragen werden.

Aus der DE-C2-37 07 243 oder aus Wissenschaftliche Berichte AEG-Telefunken 53 (1980), 1-2, Seiten 62 bis 71 ist es im Zusammenhang mit einer Digitalsignalübertragung von Fernsehsignalen, beispielsweise über Lichtwellenleiter, bekannt die in Zwischenfrequenzlage vorliegenden Fernsehsignale einzeln mittels A/D-Wandlern zu digitalisieren und mittels eines Multiplexers zu einem digitalen Zeitmultiplexsignal für die Übertragung zusammenzufassen. Nach der Übertragung wird dieses Zeitmultiplexsignal mittels eines Demultiplexers in Einzelsignale zerlegt. Diese Einzelsignale werden jeweils einzeln mittels D/A-Wandlern in Analogsignale zurückverwandelt und in eine gewünschte Frequenzlage (Kanalraster) umgesetzt.

Aus Cable Television Engineering, Vol. 14, No. 4, September 1988, Seiten 579 bis 583, ist es bekannt eine Vielzahl von analogen Video-Quellsignalen zu digitalisieren, zu einem Zeitmultiplexsignal zusammenzufassen, und nach elektrisch/optischer Wandlung über ein optisches Verteilnetz zu übertragen. Teilnehmerseitig erfolgt eine optisch/elektrische Rückwandlung, eine D/A-Wandlung und eine Umsetzung, beispielsweise in den UHF-Bereich.

Für die Übertragung ganzer Fernsehsignal-Kanalgruppen über ein Lichtwellenleiterzubringer oder -verteilnetz sind analoge Signalaufbereitungen im Frequenzmultiplex bekannt (Funkschau 15/1989, Seiten 57 bis 62; DE-C2-32 03 785).

Aus IEEE Communication Magazine, Band 24, Nr. 5, Mai 1986, Seiten 33 bis 49 ist es bekannt, mehrere Videosignale jeweils in pulsfrequenzmodulierte Signale mit verschiedenen Trägern umzusetzen und die so umgesetzten Signale einem gemeinsamen FDM(frequency-division-multiplex)-Multiplexer zuzuführen, der einen Laser für die Übertragung in einem optischen System steuert. Um teure A/D-Umsetzer zu sparen, werden in Gateways diese Einheiten im Sharing-Betrieb benutzt.

Aufgabe der Erfindung ist es, eine brauchbare digitale Fernsehsignalaufbereitung anzugeben, bei der sowohl der sendeseitige Aufwand als auch der empfangsseitige Aufwand gering gehalten werden kann. Diese Aufgabe wird durch die Merkmale des Patentanspruchs 1 gelöst.

Die abhängigen Patentansprüche zeigen vorteilhafte Weiterbildungen auf, bzw. der Anspruch 8 eine Anwendung des Verfahrens.

Die Erfindung weist folgende Vorteile auf:

Im Gegensatz zur analogen Signalaufbereitung erhöht sich bei dem digitalen Signalübertragungssystem gemäß der Erfindung die Übertragungsreichweite wegen des günstigeren S/N-Verhältnisses. Auch sind mehr optische Empfänger pro elektrooptischem Wandler (Laser) anschließbar. Hohe Linearität des elektrooptischen Wandlers (Lasers) ist nicht erforderlich, wodurch kostengünstige Laserbauelemente verwendet werden können.

Bei digitaler Aufbereitung von Fernsehsignalen wurden die einzelnen analogen Fernsehsignale bzw. geträgerten Fernsehsignale bisher einzeln aufbereitet und für die Übertragung zu einem Zeitmultiplexsignal zusammengefaßt. Auf der Empfangsseite muß das Zeitmultiplexsignal mit unter Umständen hohem Aufwand in ein Frequenzmultiplexsignal gewandelt werden. Da bei der Erfindung die Übertragung eines digital aufbereiteten Frequenzmultiplexsignals für eine Gruppe von Fernsehsignalen erfolgt, ist die Signalaufbereitung auf der Empfangsseite sehr aufwandsarm, insbesondere ist hier keine zusätzliche Frequenzmultiplexaufbereitung notwendig. Da in einem Kabelfernsehverteilnetz üblicherweise sehr viele Empfänger angeschlossen sind, wirkt sich die Aufwandsminimierung auf der Empfangsseite unter wirtschaftlichen Gesichtspunkten stark aus. Auf der Empfangsseite ist außerdem im Gegensatz zu bekannten Lösungen nur ein D/A-Wandler für eine ganze Kanalgruppe notwendig. Auch ist das Verfahren nach der Erfindung aufwärtskompatibel. Der sendeseitige Aufwand ist gering, da eine ganze Gruppe von Fernsehsignalen mit einem einzigen A/D-Wandler umgesetzt werden kann und als Frequenzmuliplexsignal übertragen werden kann. Als Fernsehsignale lassen sich mit dem Verfahren nach der Erfindung sowohl geträgerte Fernsehsignale als auch FBAS- oder Komponentensignale aufbereiten. Bei FBAS- oder Komponentensignalen ist jedoch sendeseitig vor der A/D-Wandlung eine Aufbereitung zu einem Frequenzmultiplexsignal notwendig.

Anhand der Zeichnungen wird nun das Verfahren nach der Erfindung anhand eines Ausführungsbeispiels beschrieben. Es zeigen:
- Figur 1: die Aufbereitung einer Gruppe von 8 Fernsehsignalen mit einem Kanalabstand von 7 MHz
- Figur 2: einen Frequenzplan für die Fernsehsignalumsetzung,
- Figur 3: ein vergrößerter Ausschnitt aus der ersten Zeile des Frequenzplans gemäß Figur 2,
- Figur 4: die Aufbereitung von FBAS oder Komponentensignalen,
- Figur 5: die Aufbereitung mehrerer Kanalgruppen.

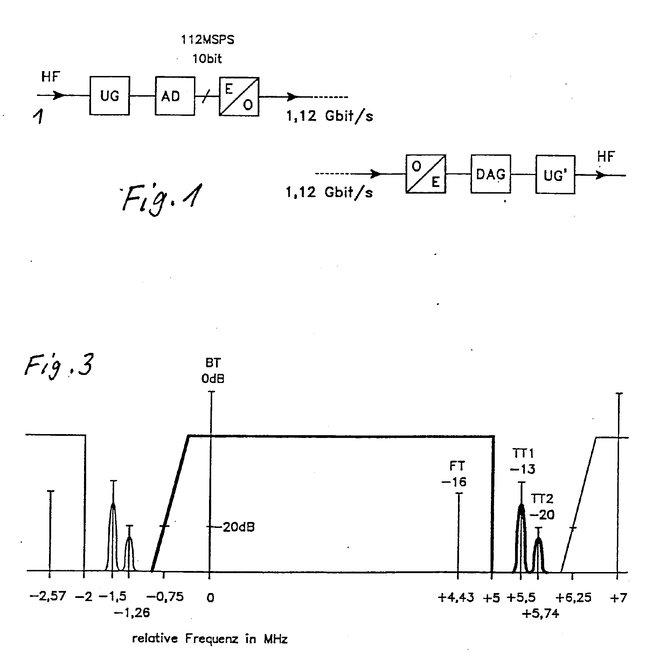

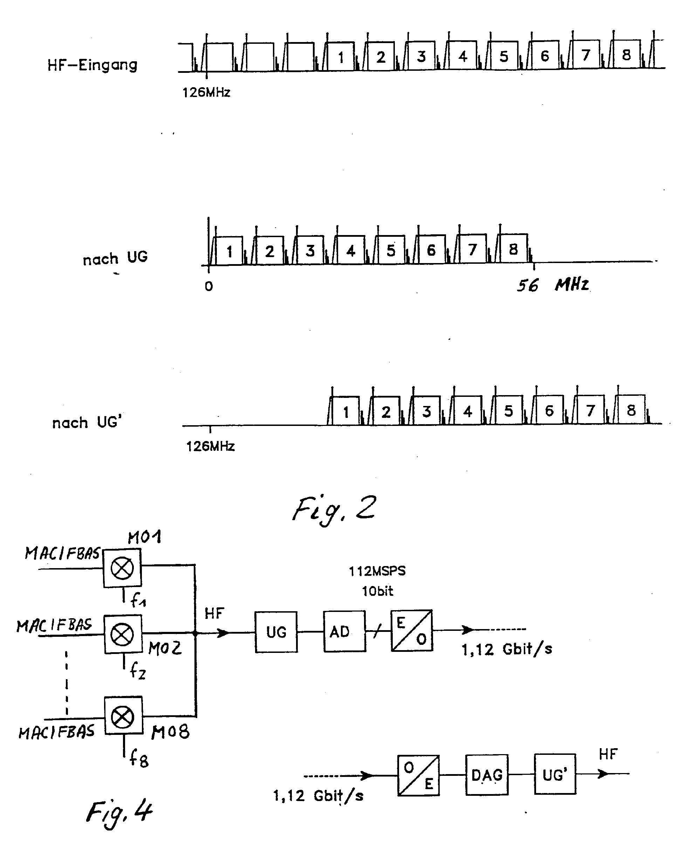

Figur 1 zeigt schematisch die Aufbereitung einer Gruppe von Fernsehsignalen, beispielsweise einer Kanalgruppe von 8 Kanälen in HF-Lage oberhalb von 126 MHz, deren Frequenzplan in Figur 2, Zeile 1 dargestellt ist. Die einzelnen Kanäle der Gruppe sind mit den Ziffern 1 bis 8 durchnumeriert. Jeder Einzelkanal ist 7 MHz breit (Bildträgerabstand). Figur 3 zeigt einen Ausschnitt aus diesem Frequenzplan vergrößert, wobei zur Vereinfachung nur relative Frequenzen in MHz bezogen auf den Bildträger BT eines Fernsehkanals angegeben sind. Dargestellt ist der Amplitudengang dieses Fernsehkanals mit Bildträger BT, Nyquistflanke bei - 0,75 MHz, Farbträger FT bei + 4,43 MHz, sowie zwei Tonträgern TT1 und TT2 mit der üblichen Amplitudenabsenkung.

Eine bei Punkt 1 angelieferte Kanalgruppe in HF-Lage wird insgesamt durch einen Umsetzer UG für die ganze Kanalgruppe (Kanalgruppenumsetzer) in eine Zwischenfrequenzlage umgesetzt. Wie aus Figur 2 (nach UG) ersichtlich ist, weisen die einzelnen Kanäle nach der Umsetzung in die Zwischenfrequenzlage die gleiche relative Anordnung zueinander wie in der HF-Lage auf. Wenn ein ganzes TV-Band verarbeitet werden soll, wird die zu verarbeitende Kanalgruppe jeweils vorher ausgefiltert.

Für die in die Zwischenfrequenzlage umgesetzte Kanalgruppe erfolgt eine Analog-Digitalwandlung mittels nur eines A/D-Wandlers, in Figur 1 mit AD bezeichnet. Die Abtastung bei der A/D-Wandlung erfolgt geschlossen für Video- und Tonanteile der gesamten Kanalgruppe. Für die A/D-Wandlung besonders günstig ist im Beispielfall ein Frequenzbereich von 0 bis 56 MHz. Die Abtastung erfolgt hier zweckmäßigerweise mit 112 MHz.

Das Frequenzmultiplexsignal wird für die Übertragung über ein Lichtwellenleiter-Verteil- und/oder Zubringernetz einer Sendeeinheit in Form eines Wandlers E/O zugeführt, elektro-optisch gewandelt und z.B. als 1,12 Gbit/s Datenstrom übertragen. Empfangsseitig sind im Falle eines Verteilnetzes, das eine Vielzahl optischer Verzweigungspunkte aufweist, eine Vielzahl von "Empfängern" vorgesehen, wobei sich ein solcher Empfänger sowohl in einer Teilnehmergruppenschalteinheit eines Kabelfernsehnetzes, die ganze Wohngebiete oder z.B. nur ein Mehrfamilienhaus versorgt, als auch im Endgerät eines Teilnehmers direkt befinden kann. Ein solcher "Empfänger" besteht aus einem opto-elektronischen Wandler O/E, einer digital-analogen Signalaufbereitung DAG für die gesamte Kanalgruppe, bestehend aus den 8 Einzelkanälen, und gegebenenfalls einem Kanalgruppen-Umsetzer UG′ zur Umsetzung der gesamten Kanalgruppe in die HF-Lage, beispielsweise den UHF-Bereich des Teilnehmergeräts. Nach der Umsetzung liegen die Kanäle in der ursprünglichen HF-Lage vor (Figur 2 nach UG′).

Da die Kanäle als Frequenzmultiplexsignal übertragen wurden, kann empfangsseitig die gesamte Kanalgruppe mit einem einzigen D/A-Wandler und einem einzigen Frequenzumsetzer (Kanalgruppen-Umsetzer) in die gewünschte HF-Lage gebracht werden. Auf diese Weise ist der empfängerseitige Aufwand bezüglich D/A-Wandlern, Filterstufen und Frequenzumsetzern minimiert.

Statt geträgerter Fernsehkanalsignalen können auch FBAS- oder Komponentensignale, z.B. MAC-Signale, nach dem Verfahren der Erfindung aufbereitet werden. Jedoch müssen diese Signale zuerst zu einer Frequenzmultiplexsignalgruppe mittels Modulatoren M01...M08 zusammengefügt werden. Die diesen Modulatoren zugeführten Modulationsfrequenzen f₁...f₈ sind im Abstand von 7 MHz gewählt damit ein Frequenzmultiplexsignal im ursprünglichen 7 MHz-Kanalraster im Frequenzbereich von beispielsweise 0...56 MHz entsteht. Die übrigen Baugruppen auf der Sendeseite können unverändert bleiben. Empfangsseitig sind überhaupt keine Änderungen notwendig (Figur 4).

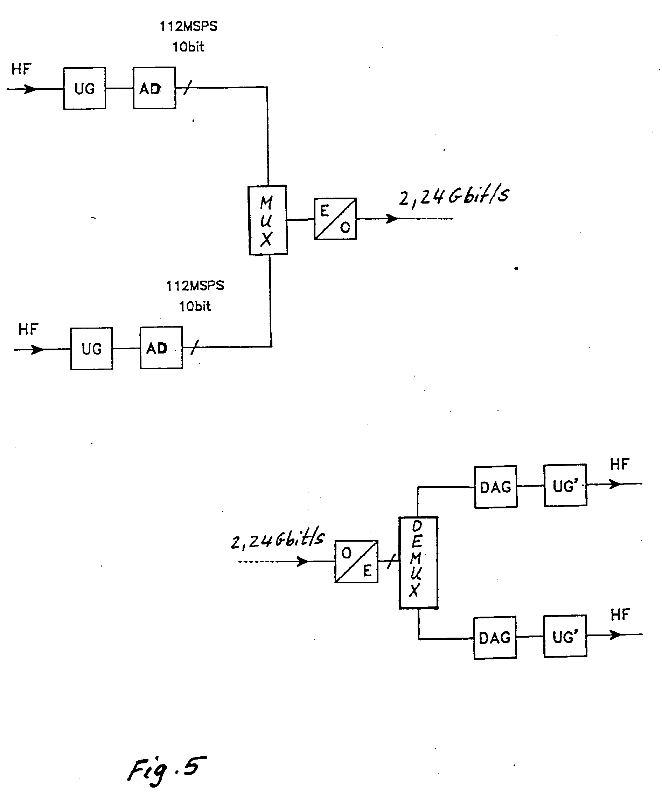

Die Signalaufbereitung gemäß der Erfindung eignet sich auch zur Aufbereitung von mehr als einer Kanalgruppe. Wie Figur 5 zeigt, können zwei oder mehr Kanalgruppen wie zuvor geschildert jeweils getrennt zu einer Frequenzmultiplexsignalgruppe zusammengefügt werden. Die so gebildeten Frequenzmultiplexsignalgruppen FM1 und FM2 können mittels eines Multiplexers MUX zu einem Zeitmultiplexsignal zusammengefaßt werden. Diese Variante ist zwar nicht empfangskompatibel mit den zuvor vorgestellten Ausführungsformen, führt jedoch dann zu einer ähnlichen Minimierung des empfängerseitigen Aufwandes, wenn die Trennung des Zeitmultiplexsignals mittels eines Demultiplexers DEMUX in die Frequenzmultiplexgruppensignale in einer höheren Netzebene des Verteilnetzes, z.B. in der B-Ebene (vgl. Anlageband 5 zum Telekommunikationsbericht, Bundesministerium für das Post- und Fernmeldewesen, 1976, Seiten 175 und 176) erfolgt.

## Patentansprüche

1. Verfahren zur Aufbereitung von mehreren Fernsehsignalen für Übertragungszwecke, wobei die aufzubereitenden Fernsehsignale bezüglich einer Kanalgruppe, die aus mehreren in einem Frequenzband angeordneten geträgerten zusammengefaßten Fernsehkanälen, besteht als Frequenzmultiplexsignal in eine Frequenzlage umgesetzt werden, die so gewählt ist, daß bei einer sich anschließenden Digitalisierung das gesamte Frequenzmultiplexsignal in einem A/D-Wandler geschlossen digitalisiert wird und anschließend einer Sendeeinheit zugeführt wird.

2. Verfahren nach Anspruch 1, dadurch gekennzeichnet, daß die Schritte des Anspruchs 1 mit zwei oder mehreren Kanalgruppen jeweils getrennt durchgeführt werden und daß die dabei gebildeten unterschiedlichen Gruppen von Frequenzmultiplexsignalen nach der jeweiligen Digitalisierung zu einem Zeitmultiplexsignal aufbereitet werden.

3. Verfahren nach einem der Ansprüche 1 oder 2, dadurch gekennzeichnet, daß bei Fernsehsignalen, insbesondere in Form von FBAS- oder Komponentensignalen, vor der Umsetzung in die für die A/D-Wandlung gewählte Frequenzlage eine Signalaufbereitung unter Zuführung von Modulationsfrequenzen derart vorgenommen wird, daß ein Frequenzmultiplexsignal für eine Kanalgruppe von Fernsehsignalen entsteht.

4. Verfahren nach Anspruch 1, dadurch gekennzeichnet, daß für die Aufbereitung eines ganzen TV-Bandes, bestehend aus einer Vielzahl von Fernsehkanälen, vor der Umsetzung die entsprechende Gruppe von Fernsehkanälen ausgefiltert wird.

5. Verfahren nach einem der Ansprüche 1 oder 3, dadurch gekennzeichnet, daß nach einer Übertragung des aufbereiteten Frequenzmultiplexsignals eine Digital-Analogwandlung mittels nur einem D/A-Wandler vorgenommen wird.

6. Verfahren nach Anspruch 5, dadurch gekennzeichnet, daß nach der Digital-Analogwandlung eine Frequenzumsetzung in eine HF-Kanalgruppe mittels eines Frequenzumsetzers vorgenommen wird.

7. Verfahren nach Anspruch 2, dadurch gekennzeichnet, daß die Maßnahmen der Ansprüche 5 und/oder 6 erst nach der Zerlegung des Zeitmultiplexsignals in die entsprechenden Frequenzmultiplexsignale vorgenommen werden.

8. Anwendung des Verfahrens nach einem der Ansprüche 1 bis 7 für die Signalübertragung mittels Lichtwellenleitern in einem Kabelfernsehzubringer und/oder -verteilnetz.

## Claims

1. Method for conditioning a plurality of television signals for transmission purposes, the television signals which are to be conditioned being converted to a frequency, as a frequency-division multiplex signal, with respect to a channel group which consists of a plurality of combined television channels on a carrier and arranged in one frequency band, which frequency is selected such that, during subsequent digitization, the entire frequency-division multiplex signal is digitized in a closed manner in an A/D converter and is subsequently fed to a transmission unit.

2. Method according to Claim 1, characterized in that the steps of Claim 1 are carried out in each case separately with two or more channel groups, and in that the different groups of frequency-division multiplex signals which are formed in this case are conditioned, after the respective digitization, to form a time-division multiplex signal.

3. Method according to one of Claims 1 or 2, characterized in that, in the case of television signals, in particular in the form of composite video or component signals, signal conditioning is carried out before the conversion to the frequency selected for A/D conversion, with modulation frequencies being fed in, in such a manner that a frequency-division multiplex signal is produced for a channel group of television signals.

4. Method according to Claim 1, characterized in that, for conditioning of an entire TV band consisting of a large number of television channels, the corresponding group of television signals is filtered out before conversion.

5. Method according to one of Claims 1 or 3, characterized in that, after transmission of the conditioned frequency-division multiplex signal, digital to analogue conversion is carried out by means of only one D/A converter.

6. Method according to Claim 5, characterized in that, after the digital to analogue conversion, frequency conversion is carried out in an RF channel group by means of a frequency converter.

7. Method according to Claim 2, characterized in that the measures in Claims 5 and/or 6 are not carried out until the time-division multiplex signal has been decomposed into the corresponding frequency-division multiplex signals.

8. Use of the method according to one of Claims 1 to 7 for signal transmission by means of optical conductors in a cable television feed and/or distribution network.

## Revendications

1. Procédé pour le traitement de plusieurs signaux de télévision en vue de leur transmission, les signaux de télévision à traiter, relatifs à un groupe de canaux, qui consiste en une pluralité de canaux de télévision sur ondes porteuses réunis et disposés dans une bande de fréquence, sont convertis en signal multiplex en fréquence dans une position de fréquence qui est choisie de façon que lors d'une numérisation venant ensuite, le signal multiplex en fréquence total soit numérisé en bloc dans un convertisseur analogique/numérique et soit ensuite amené à une unité émettrice.

2. Procédé selon la revendication 1, caractérisé en ce que les étapes de la revendication 1 sont mises en oeuvre respectivement séparément avec deux ou plusieurs groupes de canaux et en ce que les différents groupes de signaux multiples en fréquence alors formés sont traités, après numérisation respective, pour former un signal multiplex dans le temps.

3. Procédé selon une des revendications 1 ou 2, caractérisé en ce que, dans le cas de signaux de télévision, notamment sous forme de signaux complets de chrominance ou de signaux de composantes, avant la conversion dans la position de fréquence choisie pour la conversion analogique/numérique, il est procédé à un traitement de signal, sous amenée de fréquences de modulation, de sorte qu'il en résulte un signal multiplex en fréquence pour un groupe de canaux de signaux de télévision.

4. Procédé selon la revendication 1, caractérisé en ce que pour le traitement d'une bande T V complète, consistant en une pluralité de canaux de télévision, le groupe correspondant de canaux de télévision est filtré avant la conversion.

5. Procédé selon une des revendications 1 ou 3, caractérisé en ce qu'après une transmission du signal multiplex en fréquence traité, il est procédé à une conversion numérique/analogique au moyen de seulement un convertisseur numérique/analogique.

6. Procédé selon la revendication 5, caractérisé en ce qu'après la conversion numérique-analogique il est procédé à une conversion de fréquence dans un groupe de canaux HF au moyen d'un convertisseur de fréquence.

7. Procédé selon la revendication 2, caractérisé en ce que les dispositions des revendications 5 et/ou 6 ne sont mises en oeuvre qu'après la décomposition du signal multiplex en temps en les signaux multiplex en fréquence correspondants.

8. Application du procédé selon une des revendications 1 à 7 à la transmission des signaux au moyen de conducteurs d'ondes lumineuses dans un réseau d'amenée et/ou de répartition de télévision par câble.
